# EUROPEAN PATENT APPLICATION

(11) **EP 4 851 615 A1**
(43) Date of publication of application: **09.12.2026**
(21) Application number: 25180404.3
(22) Date of filing: 03.06.2025
(51) Int. Cl.: G01N 27/22

(54) **DETERMINING A PARAMETER THAT IS DESCRIPTIVE OF AN AMOUNT OF GAS IN A GAS MIXTURE**

(71) Applicant: Vaisala, OYJ, 00421 Helsinki (FI)
(72) Inventor: LEHTI, Niko, 01300 VANTAA (FI)
(74) Representative: Berggren Oy

(57) **Abstract**

According to an example embodiment, a method (200) for determining a gas parameter that is descriptive of an amount of a predefined gas in a gas mixture with a capacitive sensor (102) that is responsive to said gas is provided, the method (200) comprising: operating (202) a capacitance measurement circuit (104) coupled to the capacitive sensor (102) to produce two or more electrical measurement signals at respective two or more frequencies, wherein each electrical measurement signal is descriptive of a capacitance of said capacitance sensor (102) at the respective frequency as a function of time and comprises a respective frequency-dependent drift component; normalizing (204) at least one measurement signal of said two or more electrical measurement signals with respect to another measurement signal of said two or more electrical measurement signals based on one or more predefined normalization parameters that bring their respective drift components substantially into alignment with each other in predefined reference conditions, wherein the at least one normalized measurement signal and said another measurement signal constitute a set of two or more normalized measurement signals; and determining (206) said gas parameter based on a comparison between a pair of signals chosen from said two or more normalized measurement signals.

## Description

### TECHNICAL FIELD

The present invention relates to a technique for determining a parameter that is descriptive of an amount of a predefined gas in a gas mixture using a capacitive sensor that is responsive to the predefined gas.

### BACKGROUND

Sensor devices that are applicable for measuring gas concentration via usage of a capacitive sensor element find use in various fields of technology, in research, in industry as well as in consumer devices. As a concrete example, a capacitive gas sensor device may be applied in meteorological measurements for measurement of water vapor concentration in air, which in turn may be applied as basis for determining a dew point temperature.

An important characteristic of any capacitive gas sensor device is its stability, i.e. its continued capability to provide accurate and reliable measurement results over time. A challenge in this regard resides in accounting for capacitance drift of the capacitive sensor element that necessarily occurs in the course of operation of the capacitive gas sensor device. Typically, the capacitance drift comes in two flavors, namely,
- drift that typically gradually reduces the capacitance of the capacitive sensor element regardless of its operating conditions, and
- drift that results in a permanent change of capacitance due to an external event, such as mechanical stress or exposure to a harmful substance.

A known approach for addressing the capacitance drift is autocalibration of the capacitive gas sensor device, which may be carried out repeatedly according to a predefined schedule, e.g. at predefined time intervals. The autocalibration typically relies on manipulating temperature of the capacitive sensor element, capacitance measurements carried out at different temperatures, and application of a correction factor derived based on these measurements in subsequent operation of the capacitive gas sensor device. Additionally, the temperature changes may be further applied for purging the capacitive sensor element e.g. by applying a very high temperature for a short period of time in order to remove chemicals that have been absorbed into the capacitive sensor element over time.

A shortcoming of the temperature-manipulation-based autocalibration methods is their relatively high power consumption in comparison to the power consumption of the capacitive gas sensor device in its normal measurement operation, which may become a significant issue in battery-powered capacitive gas sensor devices operated in field conditions for a prolonged time periods. While the power consumption arising from the heating is a potential challenge of its own, in some operating environments also the heating of the device may pose a security risk, which may limit or even completely disable usage e.g. the purging approach described above. Moreover, the sensor device is typically not available for the normal measurement operation during its autocalibration, which renders the sensor device unsuited for applications where constant monitoring of the gas concentration is required.

### SUMMARY

It is an object of the present invention to provide a technique for determining a parameter that is descriptive of an amount of a predefined gas in a gas-mixture in a reliable and accurate manner via usage of a capacitive sensor.

According to an example embodiment, a method for determining a gas parameter that is descriptive of an amount of a predefined gas in a gas mixture with a capacitive sensor that is responsive to said gas is provided, the method comprising: operating a capacitance measurement circuit coupled to the capacitive sensor to produce two or more electrical measurement signals at respective two or more frequencies, wherein each electrical measurement signal is descriptive of a capacitance of said capacitance sensor at the respective frequency as a function of time and comprises a respective frequency-dependent drift component; normalizing at least one measurement signal of said two or more electrical measurement signals with respect to another measurement signal of said two or more electrical measurement signals based on one or more predefined normalization parameters that bring their respective drift components substantially into alignment with each other in predefined reference conditions, wherein the at least one normalized measurement signal and said another measurement signal constitute a set of two or more normalized measurement signals; and determining said gas parameter based on a comparison between a pair of signals chosen from said two or more normalized measurement signals.

According to another example embodiment, an apparatus for determining a gas parameter that is descriptive of an amount of a predefined gas in a gas mixture is provided, the apparatus comprising: a capacitive sensor that is responsive to said predefined gas in its operating environment; a capacitance measurement circuit coupled to the capacitive sensor and arranged to provide an electrical measurement signal that is descriptive of a capacitance of said capacitive sensor; and a processing portion arranged to: operate the capacitance measurement circuit to produce two or more electrical measurement signals at respective to or more frequencies, and determine said gas parameter based on said two or more electrical measurement signals in accordance with a method according to the example embodiment described in the foregoing.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 schematically illustrates a block diagram of some components of a sensor apparatus according to an example;
Figure 2 illustrates a method according to an example;
Figure 3A illustrates a graph that depicts electrical measurement signals according to an example;
Figure 3B illustrates a graph that depicts normalized measurement signals according to an example;
Figure 3C illustrates a graph that depicts normalized measurement signals according to an example;
Figure 4A illustrates a graph the depicts a difference signal derived based on normalized measurement signals according to an example;
Figure 4B illustrates a graph that depicts a signal representing a dew point temperature according to an example; and
Figure 5 illustrates a method according to an example.

### DESCRIPTION OF SOME EMBODIMENTS

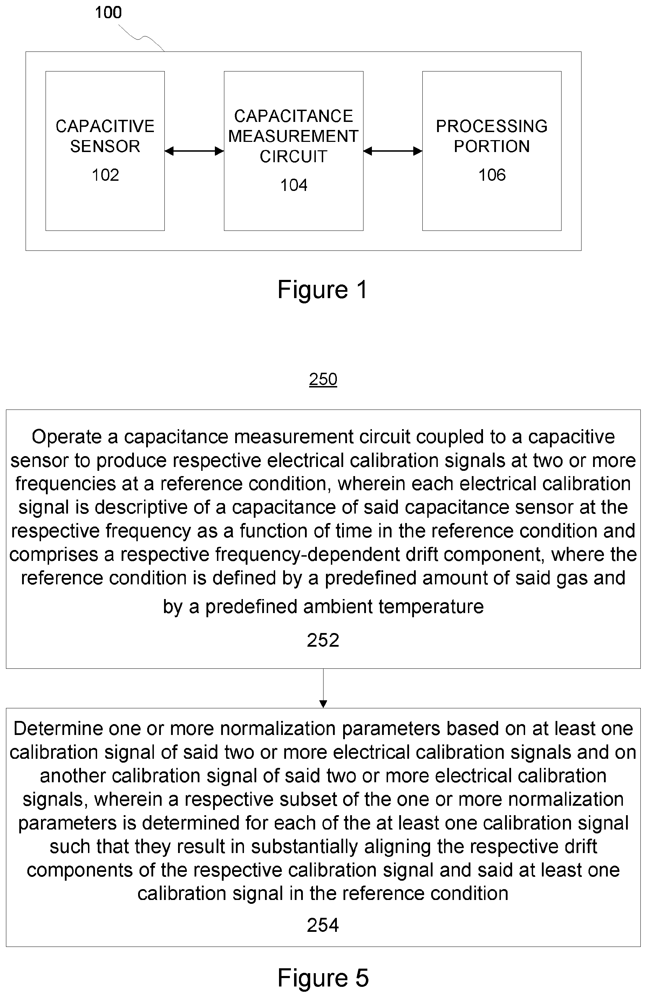

Figure 1 illustrates a block diagram that represents some components of a sensor apparatus 100 according to an example. The sensor apparatus 100 is applicable for determining a parameter that is descriptive of an amount of a predefined gas in a gas mixture. In the following, this parameter is also referred to, in brief, as a gas parameter. The sensor apparatus 100 comprises a capacitive sensor 102 that is responsive to the predefined gas in the operating environment of the sensor apparatus 100, a capacitance measurement circuit 104 that is electrically coupled to the capacitive sensor 102 and arranged to provide an electrical measurement signal that is descriptive of a capacitance of the capacitive sensor 102, and a processing portion 106 that arranged to operate the capacitance measurement circuit 104 to produce two or more electrical measurement signals at respective two or more frequencies and to determine the gas parameter based on the two or more electrical measurement signals via application of a measurement procedure that is described in the following via a number of examples.

The sensor apparatus 100 may further comprise a temperature sensor arranged to provide an electrical temperature measurement signal that is descriptive of an ambient temperature in the operating environment of the capacitive sensor 102. In various examples, the temperature sensor may be provided as part of the capacitance measurement circuit 104 or as a component that is separate from the capacitance measurement circuit 104 and it may be arranged to supply the temperature measurement signal to the processing portion 106. It is worth noting that in operating conditions where heating of the capacitive sensor 102 is not applied, the ambient temperature also serves as an indication of the temperature of the capacitive sensor 102.

In the following, various aspects of the sensor apparatus 100 according to the present disclosure are predominantly described via using a concentration of a predefined gas in the gas mixture as an example of the gas parameter of the kind described above. Moreover, throughout the present disclosure, the term gas concentration is predominantly applied to refer to the concentration of the predefined gas in the gas mixture, unless explicitly stated otherwise. Consequently, references to determination of the gas concentration are to be construed as references to determination of the concentration of the predefined gas in the gas mixture. In another example, the gas parameter that is descriptive of the amount of gas in a gas mixture comprises a partial pressure of the predefined gas.

As described above, the capacitive sensor 102 is responsive to the predefined gas in its operating environment. In particular, the capacitive sensor 102 interacts with the predefined gas such that its capacitance changes with changes in amount (e.g. changes in concentration) of the predefined gas in its operation environment. The predefined gas may be a predefined gaseous polar compound, whereas the sensor apparatus 100 may be applicable for determining the concentration of said gaseous polar compound in the gas mixture. In non-limiting examples in this regard, the gaseous polar compound may be water vapor and/or the gas mixture may be ambient air. In various examples where the gaseous polar compound under consideration is water vapor, the gas parameter derivable via operation of the sensor apparatus 100 may be e.g. one of the following: a water concentration, a water vapor pressure, a dew point temperature, a frost point temperature, a relative humidity, etc.

The capacitance measurement circuit 104 operates at least in part under control of the processing portion 106. In this regard, the capacitance measurement circuit 104 enables selectively carrying out a measurement at a measurement frequency chosen from two or more predefined frequencies in order to provide the measurement signal as one that is descriptive of the capacitance of the capacitive sensor 102 at the applied measurement frequency. The measurement may be carried out, for example, by the capacitance measurement circuit 104 alternately charging and discharging the capacitive sensor 102 at the applied measurement frequency. The two or more predefined frequencies may comprise respective two or more frequencies chosen from a range from 5 to 500 kHz. The measurement frequency applied for a given measurement may be selected under control of the processing portion 106.

The capacitance measurement circuit 104 may be implemented as an electric circuit, whereas the processing portion 106 may be implemented as an electric circuit, as a computer apparatus, or as a combination of an electric circuit and a computer apparatus. In this regard, the computer apparatus comprises a processor and a memory, where the memory is arranged to store computer program code that, when executed by the processor, causes the computer apparatus to implement at least some aspects of operation of the processing portion 106 according to the present disclosure. Reference(s) to a processor herein should be construed broadly, encompassing both programmable processors and dedicated circuits such FPGAs, ASICs, etc. In some examples, the capacitance measurement circuit 104 and the processing portion 106 are implemented as respective separate units that are electrically coupled to each other, whereas in other examples, the capacitance measurement circuit 104 and the processing portion 106 are implemented as an integrated unit.

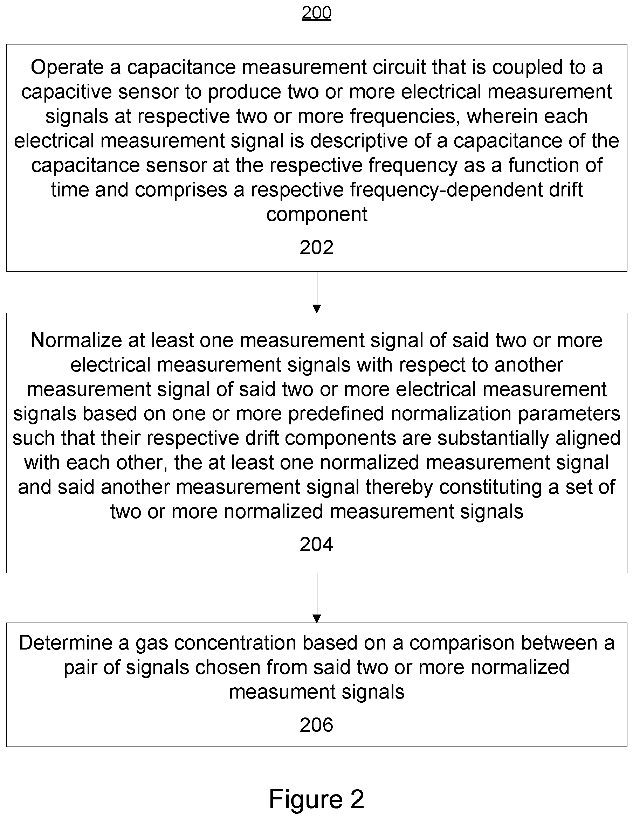

As described in the foregoing, the control portion 106 is arranged to operate the capacitance measurement circuit 104 to produce the two or more two or more electrical measurement signals at respective two or more frequencies and, subsequently, determine the gas concentration based on the two or more electrical measurement signals via application of the measurement procedure. In particular, the measurement procedure involves the control portion 106 operating the capacitance measurement circuit 104 to obtain two or more electrical measurement signals and using the obtained electrical measurement signals as the basis for determining the gas concentration. In this regard, the processing portion 106 may carry out the measurement procedure via implementing a method 200 illustrated in Figure 2, where the method 200 comprises the following steps:
- operating the capacitance measurement circuit 104 that is coupled to the capacitive sensor 102 to produce two or more electrical measurement signals at respective two or more frequencies, wherein each electrical measurement signal is descriptive of a capacitance of the capacitance sensor 102 at the respective frequency as a function of time and comprises a respective frequency-dependent drift component (block 202);
- normalizing at least one measurement signal of the two or more electrical measurement signal with respect to another measurement signal of the two or more electrical measurement signals based on one or more predefined normalization parameters that bring their respective drift components substantially into alignment with each other in predefined reference conditions, the at least one normalized measurement signal and said another measurement signal thereby constituting a set of two or more normalized measurement signals (block 204); and
- determining the gas concentration based on a comparison between a pair of signals chosen from the two or more normalized measurement signals (block 206).

The method 200 may be varied or complemented in a number of ways without departing from the scope of the measurement procedure according to the present disclosure, e.g. in a manner described in the examples provided in the foregoing and/or in the following that pertain to operation of the sensor apparatus 100 and/or to steps of the method 200.

The aspect of operating the capacitance measurement circuit 104 to obtain the two or more electrical measurement signals (cf. block 202) may comprise, for example, the processing portion 106 alternately operating the capacitance measurement circuit 104 at each of the two or more frequencies for a measurement period of predefined duration in a round-robin manner and capturing the resulting measurement signals for determination of the gas concentration via operation of the processing portion 106. Such a measurement approach may be considered as a series of measurement cycles, where each measurement cycle includes a respective measurement period for each of the two or more frequencies under consideration. Consequently, the respective measurement at each of the two or more frequencies is carried out once per measurement cycle and hence a measurement at each of the two or more frequencies is carried out repeatedly at a cycle rate. The duration of the measurement period may be chosen in view of the applied measurement frequencies, whereas in non-limiting examples, the duration of the measurement period may be e.g. in a range from a few milliseconds to one hundred milliseconds. Keeping the measurement period duration in such a range ensures that the measurement conditions do not substantially change within a single measurement cycle and that the measurement signals captured within the single measurement cycle can be considered to represent the same ambient conditions in the operating environment of the capacitive sensor 102 of the sensor apparatus 100.

Each of the measurement signals obtained via operation of the capacitance measurement circuit 104 includes a drift component, which arises from a gas-detection characteristics of the capacitive sensor 102 gradually changing (e.g. degrading) over time and which occurs regardless of the ambient conditions in the operating environment of the capacitive sensor 102 of the sensor apparatus 100. The drift component in a measurement signal obtained at a given measurement frequency represents a change rate of capacitance of the capacitive sensor 102 at the respective measurement frequency over time, which occurs also at constant ambient conditions, e.g. at a constant concentration of the predefined gas and at a constant ambient temperature. In other words, the drift component represents the gradual capacitance drift that occurs regardless of the measurement conditions in the operating environment of the capacitive sensor 102. Typically, the capacitance drift involves a gradual reduction of the capacitance of the capacitive sensor 102 (i.e. the change rate is negative), whereas in some examples also a gradual increase of capacitance is possible (i.e. the change is positive).

The change rate of the capacitance due to the drift component is frequency-dependent such that the change rate remains constant at a given frequency but the change rate is different from one frequency to another. Moreover, a ratio of respective change rates for any pair of frequencies remains the same in constant ambient conditions, e.g. at a constant gas concentration and at a constant ambient temperature. In other words, a ratio of respective change rates for a certain pair of frequencies (i.e. a change rate ratio of the respective pair of frequencies) remains constant in constant ambient conditions, e.g. in a constant gas concentration and in a constant ambient temperature. In contrast, the change rate ratio for a certain pair of frequencies changes with respective changes in ambient conditions, e.g. with a change in gas concentration and/or a change in ambient temperature. The present invention proceeds from this observation to make use of changes in the change rate ratio in determination of the gas concentration based on the respective electrical measurement signals captured at different frequencies.

Along the lines described in the foregoing, the aspect of normalizing the at least one measurement signal of the two or more electrical measurement signals with respect to the other measurement signal of the two or more measurement signals (cf. block 204) is carried out via application of the one or more normalization parameters that are arranged to bring the respective drift components in these signals substantially into alignment with each other in the reference conditions. Herein, the other measurement signal (of the two or more electrical measurement signals) may be also referred to as a reference signal with respect to which the at least one measurement signal is to be normalized. According to an example, the reference signal may be a predefined one of the two or more electrical measurement signals, i.e. one captured at a predefined measurement frequency, whereas the at least one measurement signal that are subjected to the normalization may comprise the remaining ones of the two or more electrical measurement signals. The two or more normalized measurements signals resulting from the normalization procedure (cf. block 204) may be considered as ones that are descriptive of normalized capacitance values at the respective measurement frequency as a function of time.

The one or more predefined normalization parameters may include a respective subset of one or more normalization parameters for each of the at least one measurement signal and this subset may reflect differences between the drift component of the respective one of the at least one measurement signal and the drift component of the reference signal in the reference conditions in consideration of the respective measurement frequencies applied for capturing the respective one of the at least one measurement signal and the reference signal. Herein, the reference conditions may be defined as a reference gas concentration and a reference ambient temperature). Consequently, for measurements carried out in the reference conditions, the normalization brings the respective drift components of the at least one normalized measurement signal substantially into alignment with the drift component of the reference signal, whereas for measurements carried out in measurement conditions different from the reference conditions, there is a difference between the respective drift components of the at least one normalized measurement signal and the reference signal, where the extent of difference between the respective drift components depends on the difference between the measurement conditions and the reference conditions. Hence, the difference between the respective drift components of any pair of the two or more normalized measurement signals is appliable as the basis for determining the gas concentration in the measurement conditions.

According to various examples, the one or more normalization parameters comprise a respective predefined capacitance offset and/or a respective predefined capacitance correction factor for each of the at least one measurement signal to be normalized with respect to the refence signal. In particular, the subset of one or more normalization parameters for a given electrical measurement to be normalized may comprise the respective capacitance offset and/or the respective capacitance correction factor.

According to an example of applying the normalization parameters, the normalization comprises the processing portion 106 applying the respective predefined capacitance offset to the at least one measurement signal. In an example, application of the respective capacitance offset may comprise adding a respective predefined capacitance offset value to or subtracting a respective predefined capacitance offset value from the at least one measurement signal. Application of the respective capacitance offset to an electrical measurement signal of the at least one measurement signal may be carried out, for example, as ${C}_{f , n} \left(t\right) = {C}_{f} \left(t\right) + {C}_{f , off} ,$ where *C_{f}*(*t*) denotes the electrical measurement signal at the measurement frequency *f* at time *t, C*_{f,off} denotes the capacitance offset value for the electrical measurement signal obtained at the measurement frequency *f*, and *C*_{f,n}(*t*) denotes the corresponding normalized measurement signal at the measurement frequency *f* at time *t*.

In an example, the capacitance offset value may be the same for each of the at least one measurement signal, whereas in another example respective different capacitance offset values may be applied to each of the at least one measurement signal. Along the lines described in the foregoing, the capacitance offset values are predefined and the capacitance offset value to be applied for a given electrical measurement signal may reflect a difference between respective drift components in the respective electrical measurement signal and the reference signal in the reference conditions.

According to another example of applying the normalization parameters, the normalization comprises the processing portion 106 applying the respective predefined capacitance correction factor to the at least one measurement signal. In an example, application of the respective capacitance correction factor may comprise multiplying the at least one measurement signal by a respective predefined scaling factor. Application of the respective capacitance correction factor to an electrical measurement signal of the at least one measurement signal may be carried out, for example, according to ${C}_{f , n} \left(t\right) = {a}_{f} {C}_{f} \left(t\right) ,$ where *a*_{f} denotes the capacitance correction factor for the measurement frequency *f*.

In an example, the capacitance correction factor may be the same for each of the at least one measurement signal, whereas in another example respective different capacitance correction factor may be applied to each of the at least one measurement signal. Along the lines described in the foregoing, the capacitance correction factors are predefined and the capacitance correction factor to be applied for a given electrical measurement signal may reflect a difference between respective drift components in the respective electrical measurement signal and the reference signal in the reference conditions.

In a further example of applying the normalization parameters, the normalization comprises the processing portion 106 applying the respective predefined capacitance offset and the respective predefined capacitance correction factor to the at least one measurement signal. In this regard, application of the respective capacitance offset and the respective capacitance correction factor to an electrical measurement signal of the at least one measurement signal may be carried out, for example, as ${C}_{f , n} \left(t\right) = {a}_{f} \left({C}_{f}\left(t\right)+{C}_{f , off}\right) ,$ where, as described in the foregoing, the respective capacitance offset values and/or the respective capacitance correction factors may be the same for each of the at least one measurement signal or the respective capacitance offset values and/or the respective capacitance correction factors may vary from one of the at least one measurement signal to another.

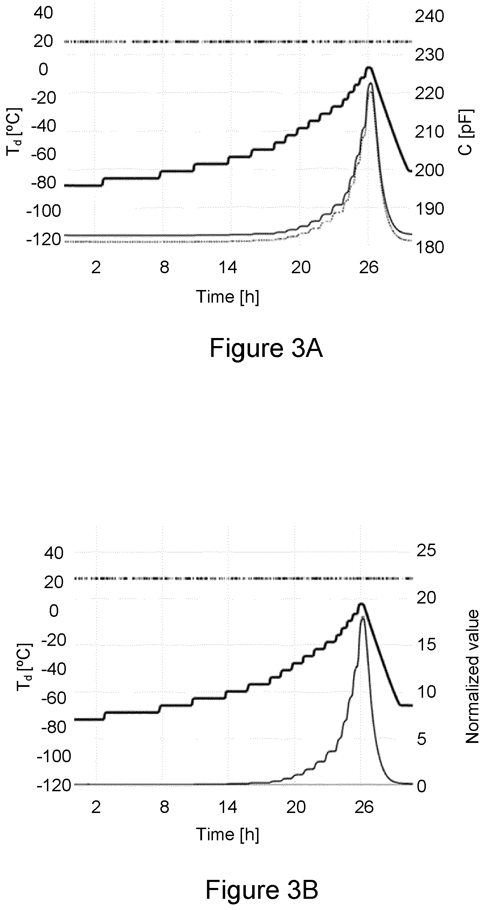

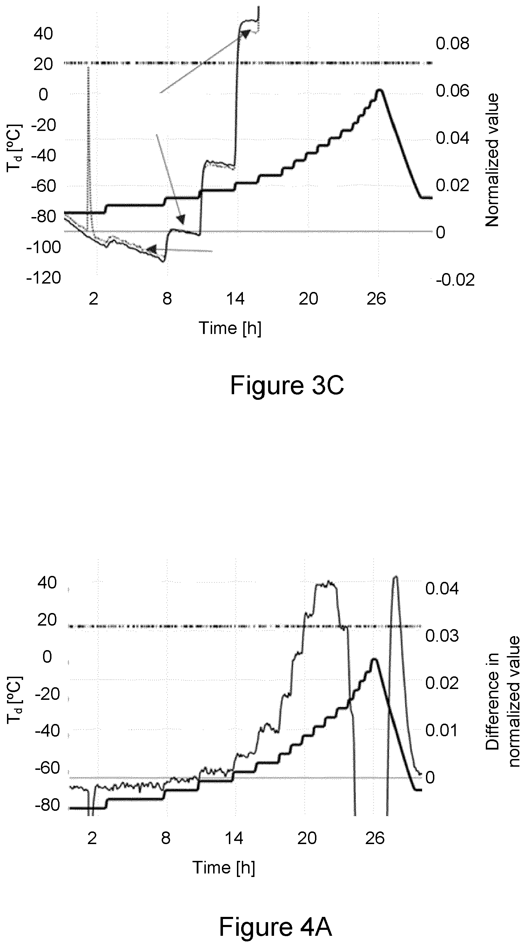

Figures 3A, 3B and 3C illustrate the normalization of the at least one measurement signal of the two or more electrical signals via an example created in a laboratory conditions, where the gas parameter under consideration is the frost point temperature. In particular, this gas parameter is referred to as the frost point temperature at temperatures below zero degrees Celsius while it is referred to as the dew point temperature at temperatures above zero degrees Celsius. Since the present example predominantly concern temperatures below zero degrees Celsius, in the following we refer to the gas parameter of this example as the frost point temperature. In the illustrations of Figures 3A, 3B and 3C, the large-dotted line represents ambient temperature as a function of time (which remains at approximately 20 °C over time) and the thick solid curve represents the frost point temperature as a function of time. Hence, the present example involves stepwise increasing frost point temperature created in the laboratory conditions for the sake of the present example, whereas in practical measurement conditions the frost point temperature (or the gas parameter in general) typically changes gradually over time.

In figure 3A, the small-dotted curve represents a first electrical measurement signal and the thin solid curve represents a second electrical measurement signal, where the first electrical measurement signal represents the capacitance of the capacitive sensor 102 at a first frequency as a function of time and the second electrical measurement signal represents the capacitance of the capacitive sensor 102 at a second frequency as a function of time, where the second frequency is different from the first frequency. In Figure 3B, the small-dotted curve represents the first electrical measurement signal and the thin solid curve represents a normalized second electrical measurement signal, which has been normalized with respect to the first electrical measurement signal using a predefined capacitance offset and a predefined capacitance correction factor. Hence, in this example the first electrical measurement signal serves as the reference signal and the second electrical measurement signal serves as the at least one measurement signal that is normalized with respect to the reference signal, whereas each of the first electrical measurement signal and the normalized second electrical measurement are descriptive of the respective normalized capacitance values as a function of time.

In the illustration of Figure 3B, the first electrical measurement signal and the normalized second electrical measurement signal substantially overlap each other, whereas the illustration of Figure 3C provides a partial zoom-in to these signals shown in Figure 3B to more clearly illustrate the differences between first electrical measurement signal and the normalized second electrical measurement signal. In particular, the portions of the first electrical measurement signal and the normalized second electrical measurement signal that in the illustration of Figure 3B appear to indicate substantially constant normalized capacitance over time when the frost point temperature remains constant appear in the zoomed-in illustration of Figure 3C as respective sloped portions that indicate the gradually decreasing normalized capacitance due to the respective drift components in the first electrical measurement signal and in the normalized second electrical measurement signal.

In particular, the zoomed-in illustration of Figure 3C indicates that the respective drift components of the first electrical measurement signal and the normalized second electrical measurement signal are substantially aligned with each other at or around the frost point temperature of -60 degrees (which may be considered as a reference frost point temperature of this example), whereas for other frost point temperatures there is a difference between the respective drift components of the first electrical measurement signal and the normalized second electrical measurement signal, where the extent of difference increases with increasing difference between the respective frost point temperature and the reference frost point temperature. In this regard, the arrows in the illustration of Figure 3C serve to point out the differences between respective drift components of the first electrical measurement signal and the normalized second electrical measurement signal at different frost point temperatures.

The aspect of determining the gas concentration based on the comparison between the pair of signals chosen from the two or more normalized measurement signals (cf. block 206) may comprise determining the gas concentration based on corresponding time portions in the chosen pair of signals. In this regard, determination of the gas concentration may be based on respective differences in respective signal levels in the corresponding one or more time portions in the chosen pair of signals. In particular, determination of the gas concentration may comprise comparison of respective signal levels in the one or more time portions in the pair of signals under consideration, where the one or more time portions under consideration are respective time portions of these two signals that are based on respective underlying electrical measurement signals that are captured substantially at the same time, e.g. during the same measurement cycle, in adjacent measurement cycles, or otherwise within a predefined time period that guarantees that the time portions of the two normalized measurement signals under consideration represent the same ambient conditions in the operating environment of the capacitive sensor 102.

The one or more time portions considered in determination of the gas concentration may comprise corresponding one or more drift portions in the chosen pair of the two or more normalized measurement signals. In this regard, a drift portion of a normalized measurement signal is a time portion during which the ambient conditions, e.g. the gas concentration and the ambient temperature, remain substantially constant and, consequently, the possible change in the respective signal levels of the pair of signals under consideration results from their respective drift components. As an example in this regard, determination of the gas concentration comprises determining a difference signal as a difference between the chosen pair of normalized measurement signals and determining the gas concentration based on the one or more drift portions in the difference signal. The difference signal may be considered as one that is descriptive of difference in normalized capacitance between the pair of normalized measurement signals under consideration. Determination of the gas concentration based on the difference signal may be carried out via application of a predefined two-variable conversion function, which is a function of the difference signal and a temperature of the capacitive sensor 102.

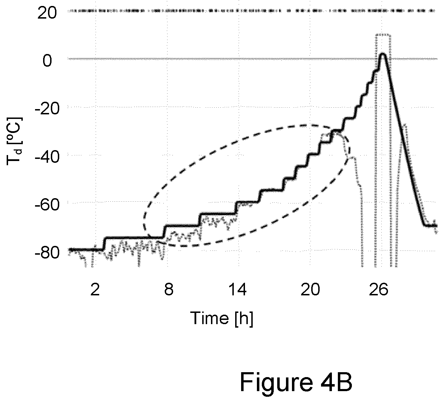

Figures 4A and 4B illustrate, respectively, a non-limiting example of the difference signal and its application for determination of the frost point temperature as the gas parameter based on the signals described in the foregoing with references to Figures 3A, 3B and 3C, where in both illustrations the large-dotted line represents the ambient temperature as a function of time and the thick solid curve represents the frost point temperature as a function of time. In particular, in Figure 4A the thin solid curve illustrates the difference signal as a function of time, where the difference signal is derived as a difference between the first electrical measurement signal and the normalized second electrical measurement signal shown in the example of Figures 3B and 3C and it is descriptive of the difference between the respective normalized capacitance values of the first electrical measurement signal and the normalized second electrical measurement signal. In Figure 4B, the thin solid curve represents the frost point temperature as a function of time as obtained via application of the two-variable conversion function based on the difference signal of Figure 4A and the ambient temperature that is assumed also as the temperature of the capacitive sensor 102. As shown in the illustration of Figure 4B, the frost point temperature obtained via application of the two-variable conversion function substantially follows the stepwise increasing frost point temperature in the operating environment of the capacitive sensor 102. The illustration of Figure 4B further shows a measurement range (as the frost point temperatures encircled by the dashed curve), which may be defined as a predefined range of frost point temperatures considered via operation of the sensor apparatus 100 and/or the method 200.

According to an example, the aspect of normalizing the at least one adjusted measurement signal (cf. block 204) and determining the gas concentration (cf. block 206) are carried out in consideration of a predefined gas concentration range. As examples in this regard, normalization of the at least one measurement signal may be carried out only to an extent that the capacitance values it represents map to the predefined gas concentration range and/or determination of the gas concentration may only consider those capacitance values represented by the normalized measurement signal that map to the predefined gas concentration range. Such limitation of the gas concentration range may facilitate defining the one or more normalization parameters applied in normalization of the at least one measurement signal in a more accurate manner via only considering the predefined (sub)range of gas concentrations. In this regard, the predefined (sub)range of gas concentrations may be chosen in view of the predefined gas considered via operation of the sensor apparatus 100 and/or in view of intended usage of the sensor apparatus 100.

The examples described in the foregoing refer to determination of the concentration of the predefined gas in the gas mixture as an example of the parameter that is descriptive of the amount of the predefined gas in the gas mixture (i.e. the gas parameter). Consequently, the predefined two-variable conversion function that may be applied for determining the gas concentration based on the difference signal and on the temperature of the capacitive sensor 102 (cf. block 206) is defined such that it directly yields the gas concentration based on the difference signal and the temperature of the capacitive sensor 102. Along the lines discussed in the foregoing, the gas concentration is a non-limiting example of the parameter that is descriptive of the amount of the predefined gas in the gas mixture and the method 200 may be applied to determine another parameter, e.g. a partial pressure of the predefined gas in the gas mixture, based on the chosen pair of the two or more normalized measurement signals. In case a parameter different from the gas concentration is determined, the method 200 may be varied from the operation described in the foregoing e.g. in one of the following ways:
- The determination of the gas concentration (cf. block 206) may be followed by the applying a predefined parameter conversion function that is applicable for converting the gas concentration into the parameter of interest, e.g. into a partial pressure of the predefined gas in the gas mixture.
- The operations described in the foregoing for determination of the gas concentration (cf. block 206) may be modified from the above-described approach such that the parameter of interest, e.g. the partial pressure of the predefined gas in the gas mixture, is directly derived from the chosen pair of the two or more normalized measurement signals. In this approach, the predefined two-variable function described above may be one that is applicable for directly determining the parameter of interest, e.g. the partial pressure of the predefined gas, based on the difference signal and on the temperature of the capacitive sensor 102.

Along the lines described in the foregoing, the predefined gas under consideration may be, for example, a predefined gaseous polar compound, whereas the sensor apparatus 100 and the method 200 carried by the processing portion 106 may be applied to determine its concentration or another parameter that is descriptive of its amount in a gas mixture of certain characteristics. In case the method 200 is applied to determine a parameter different from the concentration of the predefined gaseous polar compound, the modifications of operations that pertain to block 206 of the method 200 apply, *mutatis mutandis.*

As also described in the foregoing, the gaseous polar compound may be water vapor and/or the gas mixture may be ambient air. While also in such scenarios the parameter that is descriptive of the amount of water vapor determined via operation of the method 200 may be e.g. a water concentration or water vapor pressure, in a further example the method 200 is applicable for determining a dew point temperature, a frost point temperature, or a relative humidity based on the chosen pair of the two or more normalized measurement signals. Along the lines described above for a general case, the method 200 may be varied from the operation described in the foregoing e.g. in one of the following ways to provide determination of the dew point temperature, the frost point temperature or the relative humidity:
- The operations described in the foregoing with references to block 206 may be applied to determine a parameter other than the dew point temperature, the frost point temperature or the relative humidity, e.g. the concentration of water vapor in ambient air or the partial pressure of the water vapor in ambient air, whereas this determination may be followed by determination of the dew point temperature, the frost point temperature or the relative humidity based on the determined parameter via application of a predefined parameter conversion function that is applicable for converting the determined parameter into the dew point temperature, the frost point temperature or the relative humidity.
- The operations described in the foregoing for determination of the gas concentration (cf. block 206) may be modified from the above-described approach such that the dew point temperature, the frost point temperature or the relative humidity is directly derived from the chosen pair of the two or more normalized measurement signals. In this approach, the predefined two-variable conversion function described above may be one that is applicable for directly determining the dew point temperature, the frost point temperature or the relative humidity.

In case the gas parameter derived via operation of the sensor apparatus 100 and/or the method 200 is different from the gas concentration, in some examples, the aspect of normalizing the at least one adjusted measurement signal (cf. block 204) and determining the gas parameter (cf. block 206) are carried out in consideration of a gas parameter range, which may be also referred to as the measurement range.

The examples that pertain to operation of the sensor apparatus 100 and the method 300 to be carried out by the processing portion 106 of the sensor apparatus 100 provided in the foregoing refer to normalization of the at least one measurement signal (of the two or more electrical measurements) based on the one or more predefined normalization parameters, where the normalization parameters may comprise, for example, the respective capacitance offset and/or the respective capacitance correction factor for each of the at least one measurement signal that are subjected to the normalization.

The one or more normalization parameters as well as the two-variable conversion function described in the foregoing may be defined via a calibration procedure carried out before calibrating or re-calibrating the sensor apparatus 100 for determination of the parameter that is descriptive of the amount of the predefined gas in the gas mixture. The calibration procedure may be carried out, for example, by the processing portion 106 of the sensor apparatus 100 or by a(nother) computer apparatus of the kind described in the foregoing. In the latter scenario, the one or more normalization parameters may be transferred from the (other) computer apparatus to the processing portion 106 of the sensor apparatus 100 for subsequent use the normalization of the at least one measurement signal.

The calibration procedure to be carried out by the processing portion 106 or the (other) computer apparatus may be implemented, for example, as a method 250 illustrated in Figure 5, where the method 250 comprises the following steps:
- operating the capacitance measurement circuit 104 to produce respective electrical calibration signals at the two or more frequencies at the reference conditions, wherein each electrical calibration signal is descriptive of a capacitance of said capacitance sensor 102 at the respective frequency as a function of time in the reference conditions and comprises a respective frequency-dependent drift component, where the reference conditions are defined by a predefined amount of said gas and by a respective ambient temperature (block 252); and
- determining, the one or more normalization parameters based on at least one calibration signal of said two or more electrical calibration and on another calibration signal of said two or more electrical calibration signals, wherein a respective subset of the one or more calibration parameters is determined for each of said at least one calibration signal such that they result in substantially aligning the respective drift components of said at least one calibration signal and said another calibration signal in the reference conditions (block 254).

The method 250 may be varied or complemented in a number of ways without departing from the scope of the calibration procedure according to the present disclosure, e.g. in a manner described in the examples provided in the foregoing and/or in the following that pertain to operation of the apparatus that is applied for carrying out the calibration procedure (e.g. the processing portion 106 of the sensor apparatus 100) and/or to steps of the method 250.

As described in the foregoing, the subset of one or more normalization parameters determined for a certain calibration signal may comprise the respective capacitance offset and/or the respective capacitance scaling factor for the respective calibration signal. The two or more frequencies applied in the calibration procedure are the same ones applied for the measurement procedure according to the method 200 and the subset of one or more normalization parameters derived for an electrical calibration signal at a certain frequency are applicable as the subset of one or more normalization parameters for the electrical measurement signal obtained at the same frequency.

The calibration procedure according to the method 250 may further comprise or it may be followed by derivation of the two-variable conversion function described in the foregoing. This may involve, for example, operating the capacitance measurement circuit 104 to produce respective further electrical calibration signals at the two or more frequencies at a plurality of calibration conditions, where each calibration condition is defined by a respective amount of said gas and by a respective ambient temperature and deriving the two-factor conversion function based at least in part on the further calibration signals in consideration of the respective calibration conditions in comparison to the reference conditions. The respective ranges for the amounts of gas and for ambient temperatures considered in the calibration conditions may be chosen in view of the predefined gas considered via operation of the sensor apparatus 100 and/or in view of intended usage of the sensor apparatus 100.

## Claims

1. A method (200) for determining a gas parameter that is descriptive of an amount of a predefined gas in a gas mixture with a capacitive sensor (102) that is responsive to said gas, the method (200) comprising:
operating (202) a capacitance measurement circuit (104) coupled to the capacitive sensor (102) to produce two or more electrical measurement signals at respective two or more frequencies, wherein each electrical measurement signal is descriptive of a capacitance of said capacitance sensor (102) at the respective frequency as a function of time and comprises a respective frequency-dependent drift component;
normalizing (204) at least one measurement signal of said two or more electrical measurement signals with respect to another measurement signal of said two or more electrical measurement signals based on one or more predefined normalization parameters that bring their respective drift components substantially into alignment with each other in predefined reference conditions, wherein the at least one normalized measurement signal and said another measurement signal constitute a set of two or more normalized measurement signals; and
determining (206) said gas parameter based on a comparison between a pair of signals chosen from said two or more normalized measurement signals.

2. A method (200) according to claim 1, wherein, for each electrical measurement signal, the respective drift component represents a change rate of capacitance at the respective frequency over time that occurs regardless of ambient conditions in operating environment of the capacitive sensor (102).

3. A method (200) according to claim 2, wherein a ratio of the respective change rates of the drift components of the two or more electrical measurement signals remains substantially constant at the constant amount of said gas and at the constant ambient temperature and the ratio is different at different amounts of said gas.

4. A method according to any of claims 1 to 3, wherein normalizing (204) the at least one measurement signal with respect to said another measurement signal comprises modifying the at least one measurement signal such that their respective change rates become substantially the same.

5. A method (200) according to any of claims 1 to 4, wherein said one or more normalization parameters comprise a respective predefined capacitance offset and/or a respective predefined capacitance correction factor for each of the at least one measurement signal and wherein normalizing (204) the at least one measurement signal with respect to said another measurement signal comprises at least one of the following:
applying the respective predefined capacitance offset to the at least one measurement signal,
applying the respective predefined capacitance correction factor to the at least one measurement signal.

6. A method (200) according to any of claims 1 to 5, wherein
normalizing (204) the at least one measurement signal is carried out in consideration of a predefined range of amounts of gas, and
determining (206) said gas parameter comprises determining said gas parameter as a value within said predefined range of amounts of gas.

7. A method (200) according to any of claims 1 to 6, wherein said two or more frequencies comprise two or more predefined frequencies chosen from a range from 5 to 500 kHz.

8. A method (200) according to any of claims 1 to 7, comprising determining (206) said parameter based on corresponding time portions of said pair of signals.

9. A method (200) according to any of claims 1 to 8, wherein determining (206) said gas parameter comprises:
deriving respective differences between corresponding one or more drift portions in said pair of signals, and
determining said gas parameter based on the derived differences.

10. A method (200) according to claim 9, wherein determining (206) said gas parameter comprises:
deriving at least one difference signal as a difference between said pair of signals, and
determining said gas parameter based on one or more drift portions of difference signal via application of a predefined two-variable conversion function of the at least one difference signal and a temperature of the capacitive sensor (102).

11. A method (200) according to any of claims 1 to 10, wherein said gas parameter is descriptive of an amount of a predefined gaseous polar compound in said gas mixture.

12. A method (200) according to claim 11, wherein said gas parameter comprises one of the following:
a concentration of said gas,
a partial pressure of said gas,

13. A method (200) according to claim 11, wherein said gaseous polar compound comprises water vapor and said gas parameter comprises one of the following: a water vapor pressure, water concentration, a dew point temperature, a frost point temperature, a relative humidity.

14. A method (250) for determining one or more normalization parameters for use with the method according to any of claims 1 to 13, the method (250) comprising:
operating (252) the capacitance measurement circuit (104) coupled to the capacitive sensor (102) to produce respective electrical calibration signals at the two or more frequencies at the reference conditions, wherein each electrical measurement signal is descriptive of a capacitance of said capacitance sensor (102) at the respective frequency as a function of time in the reference conditions and comprises a respective frequency-dependent drift component, where the reference conditions are defined by a predefined amount of said gas and by a predefined ambient temperature;
determining (254) the one or more normalization parameters based on at least one calibration signal and on another calibration signal of said two or more electrical calibration signals, wherein a respective subset of one or more normalization parameters is determined for each of the at least one calibration signal such that they result in substantially aligning the respective drift components of the respective calibration signal and said at least one calibration signal in the reference conditions.

15. A method according to claim 14, wherein the respective subset of one or normalization parameters for a given of the at least one calibration signal comprises one or more of the following:
a respective capacitance offset to be applied to an electrical measurement signal obtained at the respective frequency,
a respective capacitance correction factor to be applied to said at least one measurement signal obtained at the respective frequency.

16. An apparatus (100) for determining a gas parameter that is descriptive of an amount of a predefined gas in a gas mixture, the apparatus (100) comprising:
a capacitive sensor (102) that is responsive to said predefined gas in its operating environment;
a capacitance measurement circuit (104) coupled to the capacitive sensor (102) and arranged to provide an electrical measurement signal that is descriptive of a capacitance of said capacitive sensor (102); and
a processing portion (106) arranged to:
operate the capacitance measurement circuit (104) to produce two or more electrical measurement signals at respective to or more frequencies, and
determine said gas parameter based on said two or more electrical measurement signals in accordance with a method according to any of claims 1 to 13.

17. An apparatus according to claim 16, wherein the capacitance measurement circuit (104) is arranged to selectively carry out a measurement at a measurement frequency chosen from two or more predefined frequencies to provide the measurement signal as one that is descriptive of the capacitance of the capacitive sensor (102) at said measurement frequency.

## Amended claims

### Amended claims in accordance with Rule 137(2) EPC.

1. A method (200) for determining a gas parameter that is descriptive of an amount of a predefined gas in a gas mixture with a capacitive sensor (102) that is responsive to said gas, the method (200) comprising:
operating (202) a capacitance measurement circuit (104) coupled to the capacitive sensor (102) to produce two or more electrical measurement signals at respective two or more measurement frequencies selected from two or more predefined frequencies, wherein each electrical measurement signal is descriptive of a capacitance of said capacitance sensor (102) at the respective measurement frequency as a function of time and comprises a respective frequency-dependent drift component;
normalizing (204) at least one measurement signal of said two or more electrical measurement signals with respect to another measurement signal of said two or more electrical measurement signals based on one or more predefined normalization parameters that bring their respective drift components substantially into alignment with each other in predefined reference conditions, wherein the at least one normalized measurement signal and said another measurement signal constitute a set of two or more normalized measurement signals; and
determining (206) said gas parameter based on a comparison between a pair of signals chosen from said two or more normalized measurement signals.

2. A method (200) according to claim 1, wherein, for each electrical measurement signal, the respective drift component represents a change rate of capacitance at the respective frequency over time that occurs regardless of ambient conditions in operating environment of the capacitive sensor (102).

3. A method (200) according to claim 2, wherein a ratio of the respective change rates of the drift components of the two or more electrical measurement signals remains substantially constant at the constant amount of said gas and at the constant ambient temperature and the ratio is different at different amounts of said gas.

4. A method according to any of claims 1 to 3, wherein normalizing (204) the at least one measurement signal with respect to said another measurement signal comprises modifying the at least one measurement signal such that their respective change rates become substantially the same.

5. A method (200) according to any of claims 1 to 4, wherein said one or more normalization parameters comprise a respective predefined capacitance offset and/or a respective predefined capacitance correction factor for each of the at least one measurement signal and wherein normalizing (204) the at least one measurement signal with respect to said another measurement signal comprises at least one of the following:
applying the respective predefined capacitance offset to the at least one measurement signal,
applying the respective predefined capacitance correction factor to the at least one measurement signal.

6. A method (200) according to any of claims 1 to 5, wherein
normalizing (204) the at least one measurement signal is carried out in consideration of a predefined range of amounts of gas, and
determining (206) said gas parameter comprises determining said gas parameter as a value within said predefined range of amounts of gas.

7. A method (200) according to any of claims 1 to 6, wherein said two or more measurement frequencies comprise two or more predefined frequencies chosen from a range from 5 to 500 kHz.

8. A method (200) according to any of claims 1 to 7, comprising determining (206) said parameter based on corresponding time portions of said pair of signals.

9. A method (200) according to any of claims 1 to 8, wherein determining (206) said gas parameter comprises:
deriving respective differences between corresponding one or more drift portions in said pair of signals, and
determining said gas parameter based on the derived differences.

10. A method (200) according to claim 9, wherein determining (206) said gas parameter comprises:
deriving at least one difference signal as a difference between said pair of signals, and
determining said gas parameter based on one or more drift portions of difference signal via application of a predefined two-variable conversion function of the at least one difference signal and a temperature of the capacitive sensor (102).

11. A method (200) according to any of claims 1 to 10, wherein said gas parameter is descriptive of an amount of a predefined gaseous polar compound in said gas mixture.

12. A method (200) according to claim 11, wherein said gas parameter comprises one of the following:
a concentration of said gas,
a partial pressure of said gas,

13. A method (200) according to claim 11, wherein said gaseous polar compound comprises water vapor and said gas parameter comprises one of the following: a water vapor pressure, water concentration, a dew point temperature, a frost point temperature, a relative humidity.

14. A method (250) for determining one or more normalization parameters for use with the method according to any of claims 1 to 13, the method (250) comprising:
operating (252) the capacitance measurement circuit (104) coupled to the capacitive sensor (102) at the reference conditions to produce respective electrical calibration signals at the two or more predefined frequencies, wherein each electrical measurement signal is descriptive of a capacitance of said capacitance sensor (102) at the respective frequency as a function of time in the reference conditions and comprises a respective frequency-dependent drift component, where the reference conditions are defined by a predefined amount of said gas and by a predefined ambient temperature;
determining (254) the one or more normalization parameters based on at least one calibration signal and on another calibration signal of said two or more electrical calibration signals, wherein a respective subset of one or more normalization parameters is determined for each of the at least one calibration signal such that they result in substantially aligning the respective drift components of the respective calibration signal and said at least one calibration signal in the reference conditions.

15. A method according to claim 14, wherein the respective subset of one or normalization parameters for a given of the at least one calibration signal comprises one or more of the following:
a respective capacitance offset to be applied to an electrical measurement signal obtained at the respective frequency,
a respective capacitance correction factor to be applied to said at least one measurement signal obtained at the respective frequency.

16. An apparatus (100) for determining a gas parameter that is descriptive of an amount of a predefined gas in a gas mixture, the apparatus (100) comprising:
a capacitive sensor (102) that is responsive to said predefined gas in its operating environment;
a capacitance measurement circuit (104) coupled to the capacitive sensor (102) and arranged to provide an electrical measurement signal that is descriptive of a capacitance of said capacitive sensor (102); and
a processing portion (106) arranged to:
operate the capacitance measurement circuit (104) to produce two or more electrical measurement signals at respective two or more measurement frequencies selected from two or more predefined frequencies, and
determine said gas parameter based on said two or more electrical measurement signals in accordance with a method according to any of claims 1 to 13.

17. An apparatus according to claim 16, wherein the capacitance measurement circuit (104) is arranged to selectively carry out a measurement at a measurement frequency chosen from the two or more predefined frequencies to provide the measurement signal as one that is descriptive of the capacitance of the capacitive sensor (102) at said measurement frequency.
